# EUROPEAN PATENT APPLICATION

(11) **EP 0 710 695 A2**
(43) Date of publication of application: **08.05.1996**
(21) Application number: 95117341.8
(22) Date of filing: 03.11.1995
(51) Int. Cl.: C08J 9/10

(54) **Silicone rubber sponge composition**

(30) Priority: 04.11.1994 JP 271107/94
(71) Applicant: TOSHIBA SILICONE CO., LTD., Tokyo 106 (JP)
(72) Inventor: Iijima, Hiroyoshi, c/o Toshiba Silicone Co., Ltd., Minato-ku, Tokyo (JP); Sawada, Makoto, c/o Toshiba Silicone Co., Ltd., Minato-ku, Tokyo (JP); Iida, Isao, c/o Toshiba Silicone Co., Ltd., Minato-ku, Tokyo (JP)
(74) Representative: Hansen, Bernd, Dr. Dipl.-Chem.

(57) **Abstract**

A silicone rubber sponge composition obtained by compounding 100 parts by weight of a thermosetting silicone rubber composition with from 0.01 to 50 parts by weight of 1,1'-azo-bis(1-acetoxy-1-phenylethane). The silicone rubber sponge composition can provide a silicone rubber sponge which has a high foaming ratio, has a fine and uniform cell structure, is excellent in the surface smoothness of the skin layer, does not show a surface tackiness, has a good compression set, and does not require a post cure of a long time.

## Description

### FIELD OF THE INVENTION

The present invention relates to a silicone rubber sponge composition and a silicone rubber sponge using the composition, and more specifically, the invention relates to a silicone rubber sponge composition capable of obtaining a silicone rubber sponge which is excellent in the foamability, has a fine cell structure, is excellent in the surface smoothness of the skin layer, has no surface tackiness, has a good compression set, and does not need a post cure of a long time, and also to a silicone rubber sponge using the composition.

### BACKGROUND OF THE INVENTION

Hitherto, a silicone rubber sponge is well known as a material excellent in the weather resistance, the electric characteristics, and the compression set.

The silicone rubber sponge is fundamentally obtained by compounding a thermosetting silicone rubber composition with an organic foaming agent and a curing agent and foaming and curing the compounded mixture by heating, but in this case, it is important that the silicone rubber sponge obtained is excellent in the surface smoothness of the skin layer, has no surface tackiness, has a good compression set, and does not impair the inherent properties that a silicone rubber possesses. From such a view point, hitherto, azobisisobutyronitrile (AIBN) has been generally used as the foaming agent.

However, when azobisisobutyronitrile (AIBN) is used, a post cure of a long time is required, which causes a problem of prolonging the production time, and hence for shortening the production time, shortening the post cure time has been desired.

For the purpose, methods of using other foaming agents than azobisisobutyronitrile have been investigated, and for example, a method of using azodicarbonamide (ADCA) or dinitropentamethylenetetramine (DPT) is proposed as described in JP-A-55-29565 (the term "JP-A" as used herein means an "unexamined published Japanese patent application"). However, these foaming agents scarcely foam by simply compounding with a silicone rubber compound and making free foaming only under hot blast, like the case of using azobisisobutyronitrile, and also in the case of using these foaming agents, there are problems that the silicone rubber sponges formed are greatly poor in the surface smoothness and leave a tacky feeling on the surfaces thereof.

Recently, as a method of solving these problems, a method of using a silicone polymer, wherein a 1-ethyl-1-butyl group, an ethylidenenorbonyl group, etc., is used as the crosslinking group in place of a conventional vinyl group, as the base polymer (JP-A-2-16132) and a method of using a silicone polymer, wherein a cycloalkyl group such as cyclohexyl group, etc., is used as the crosslinking agent, as the base polymer (JP-A-2-251542) are proposed.

However, although the foaming property, the surface smoothness and the surface tackiness are improved in these methods, these methods have a defect that the silicone rubber sponges formed are greatly poor in the compression set characteristics as compared with the sponge moldings obtained using azobisisobutyronitrile as the foaming agent.

Furthermore, the case of using a silicone polymer, which does not have an aliphatic unsaturated group such as a vinyl group, etc., that is, a silicone polymer, wherein the organic groups bonded to the silicon atom are composed of a methyl group, an ethyl group, a propyl group, a phenyl group, a 3,3,3-trifluoropropyl group, etc., only, as the base polymer is reported but in this case, although the problems of the surface smoothness and the surface tackiness are solved, it is very difficult to control crosslinking and also the compression set characteristics are greatly poor.

As described above, for obtaining a silicone rubber sponge having a high foaming ratio and a uniform cell structure, a method of using azobisisobutyronitrile as the foaming agent has hitherto been generally used, but since in this case, a post cure of long time is required and thus there is a problem in the productivity as described above, the development of a technique substituting for the above-described method has been demanded.

However, the conventional methods proposed or reported as described above have problems in the foaming property, the surface smoothness, and the surface tackiness as well as there is a defect that the compression set characteristics are greatly poor. Thus satisfactory methods of obtaining silicone rubber sponges have not yet been obtained in the actual situation.

### SUMMARY OF THE INVENTION

The present invention has been made to overcome the problems in the conventional techniques.

Accordingly, one object of the present invention is to provide a silicone rubber sponge composition capable of obtaining a silicone rubber sponge, which has a high foaming ratio, has a uniform cell structure, has no problems in the surface smoothness and the surface tackiness, and has good compression set characteristics, without using azobisisobutyronitrile as the foaming agent.

Another object of the present invention is to provide a silicone rubber sponge using the composition.

As a result of various investigations for attaining the objects described above, the inventors have found that by using a definite amount of 1,1'-azo-bis(1-acetoxy-1-phenylethane) as the foaming agent, a silicone rubber sponge which has an excellent foaming property even under hot blast, has a fine cell structure, is excellent in the surface smoothness of the skin layer, does not show a surface tackiness, has a good compression set, and does not need a post cure of a long time can be easily prepared, and have accomplished the present invention.

According to one embodiment of the present invention, there is provided a silicone rubber sponge composition comprising (A) a thermosetting silicone rubber composition compounded with (B) 1,1'-azo-bis(1-acetoxy-1-phenylethane) as a foaming agent in an amount of from 0.01 to 50 parts by weight per 100 parts by weight of the thermosetting silicone rubber composition.

According to another embodiment of the present invention, there is provided a silicone rubber sponge prepared by foaming and curing the thermosetting silicone rubber sponge composition.

### DETAILED DESCRIPTION OF THE INVENTION

The present invention is described in detail below.

First, the constituent components which constitute the silicone rubber sponge composition of the present invention are explained.

The silicone rubber sponge composition of the present invention comprises (A) a thermosetting millable silicone rubber composition and (B) 1,1'-azo-bis(1-acetoxy-1-phenylethane). The thermosetting millable silicone rubber composition (A) is a composition obtained by compounding (a) a polyorganosiloxane base polymer, (b) a curing agent, and, if necessary, (a₁) a reinforcing silica filler, (a₂) carbon black, other various additives, etc., and uniformly dispersing them.

The reinforcing silica filler (a₁) used in the composition is a material necessary for improving the workability, the mechanical strength, etc., of the silicone rubber. Examples of such a filler are wet silica, fumed silica, silica aerogel, calcined silica, etc., which are conventionally used. A non-reinforcing silica such as ground quartz, diatomaceous earth, etc., may also be used together.

These fillers each may be used as it is or may be surface-treated with an organosiloxane, a polyorganosiloxane, a hexaorganodisiloxane, etc. The compounding amount of the reinforcing silica filler (a₁) is generally in the range of from 1 to 100 parts by weight per 100 parts by weight of the polyorganosiloxane base polymer (a), but the amount is not limited to this range.

As electroconductive carbon black as the component (a₂), carbon black usually used for conductive rubber compositions can be used. For example, there are acetylene black, conductive furnace black (CF), a super conductive furnace black (SCF), extra conductive furnace black (XCF), conductive channel black (CC), and furnace black or channel black heat-treated at high temperature of about 1,500°C.

Examples of acetylene black are Denka Acetylene Black (trade name, made by Denki Kagaku Kogyo K.K.) and Shounigan Acetylene Black (trade name, made by Shounigan Chemical Co.). Examples of conductive furnace black are Continex CF (trade name, made by Continental Carbon Co.) and Balkan SC (Cabot Co.). Examples of extra conductive furnace black are Asahi HS-500 (trade name, made by Asahi Carbon K.K.) and Balkan XC-72 (Cabot Co.). Examples of the conductive channel black are Colax L (trade name, made by Degussa Co.), etc. Ketchen Black EC and Ketchen Black EC-600JD (trade names, made by Ketchen Black International Co.), which are one kind of furnace black, can also be used.

The compounding amount of the conductive carbon black (a₂) is preferably from 1 to 100 parts by weight, and more preferably from 10 to 70 parts by weight, per 100 parts by weight of the organopolysiloxane base polymer. If the amount is less than 1 part by weight, as the case may be, a desired electroconductivity is not obtained, and if the amount is over 100 parts by weight, as the case may be, the mechanical strength of the cured product becomes poor.

In these various components used for the silicone rubber composition, the polyorganosiloxane base polymer (a) and the curing agent (b) are properly selected according to the reaction mechanism for obtaining the rubbery elastic body. As the reaction mechanism, (1) a crosslinking method with an organic peroxide vulcanizing agent, (2) a method by an addition reaction, etc., are known, and it is well-known that according to the reaction mechanism, a preferred combination of the component (a) and the component (b), that is, a curing catalyst or a crosslinking agent, is determined.

That is, when the crosslinking method (1) is applied, there is usually no particular restriction on the base polymer as the component (a), but a polydiorganosiloxane wherein at least one of the organic groups bonded to the silicon atoms in one molecule is a vinyl group is preferably used. Also, as the curing agent as the component (b), an organic peroxide vulcanizing agent such as benzoyl peroxide, 2,4-dichlorobenzoyl peroxide, monochlorobenzoyl peroxide, 2,5-dimethyl-2,5-di-t-butylperoxyhexane, t-butylperoxy benzoate, dicumyl peroxide, cumyl-t-butyl peroxide, etc., is used.

In the case of carrying out a hot-air vulcanization, a diacyl type organic peroxide such as benzoyl peroxide, 2,4-dichlorobenzoyl peroxide, etc., is generally used.

In addition, these organic peroxide vulcanizing agents are used alone or as a mixture of them.

The compounding amount of the organic peroxide, which is the curing agent as the component (b), is preferably in the range of from 0.05 to 15 parts by weight per 100 parts by weight of the silicone base polymer as the component (a). If the compounding amount of the organic peroxide is less than 0.05 part by weight, the vulcanization is not carried out sufficiently, while if the compounding amount thereof is over 15 parts by weight, not only the more specific effect by increasing the amount is not obtained but also it sometimes happens that the organic peroxide gives a bad influence on the properties of the silicone rubber obtained.

As the base polymer as the component (a) in the case of applying the above-described addition reaction (2), a polyorganosiloxane wherein at least one of the organic groups bonded to the silicon atoms in one molecule is a vinyl group is used.

Also, as the curing agent as the component (b), a platinum catalyst such as chloroplatinic acid, a platinum-olefin complex, a platinum-vinylsiloxane complex, platinum black, a platinum-triphenylphosphine complex, etc., is used as the curing catalyst, and a polyorganosiloxane having on the average at least two hydrogen atoms bonded to the silicon atoms in one molecule is used as the crosslinking agent.

In the curing agents as the component (b), the compounding amount of the curing catalyst is preferably in the range of from 1 to 1,000 ppm calculated as platinum element, to the base polymer as the component (a). If the compounding amount of the curing catalyst is less than 1 ppm as platinum element, curing does not proceed sufficiently, while if the compounding amount thereof is over 1,000 ppm, the improvement of the curing speed by the increase of the curing catalyst cannot be expected.

The compounding amount of the crosslinking agent is the amount such that the number of the hydrogen atoms bonded to the silicon atoms in the crosslinking agent is preferably from 0.5 to 4.0, and more preferably from 1.0 to 3.0, to one alkenyl group in the component (a). If the amount of the hydrogen atom is less than 0.5, curing of the composition does not proceed sufficiently and the hardness after curing becomes low, while if the amount of the hydrogen atoms is over 4.0, the physical properties and the heat resistance of the composition after curing are lowered.

Other organic groups than the alkenyl group in the polyorganosiloxane as the base polymer as the component (a) used in the various reaction mechanisms as described above are monovalent substituted or unsubstituted hydrocarbon groups, and examples thereof are unsubstituted hydrocarbon groups, e.g., alkyl groups such as methyl, ethyl, propyl, butyl, hexyl, dodecyl, etc.; aryl groups such as phenyl, etc.; and aralkyl groups such as β-phenylpropyl, etc.; and substituted hydrocarbon groups such as a chloromethyl group, 3,3,3-trifluoropropyl group, etc. In addition, a methyl group is generally used due to the ease of the synthesis of the base polymer.

The average degree of polymerization of the polyorganosiloxane as the base polymer as the component (a) is from 3,000 to 30,000. If the degree of polymerization is less than 3,000, the mechanical strength of the silicone rubber sponge is lowered, while if the degree of polymerization is over 30,000, it is difficult to compound the filler, thereby reducing the workability.

It is desirable that the base polymer is substantially a straight chain, but the polymer may be partially branched in the usable range.

For obtaining the silicone rubber sponge having a finer cell structure and a high foaming ratio, it is effective to use a diacyl type organic peroxide such as benzoyl peroxide, 2,4-dichlorobenzoyl peroxide, monochlorobenzoyl peroxide, etc., and other organic peroxide or the curing agent in the addition reaction (2) as the curing agents, together.

The component (B), 1,1'-azo-bis(1-acetoxy-1-phenylethane), is a component for imparting the effects of the present invention to the silicone rubber sponge composition or the silicone rubber sponge of the present invention. The melting point, the decomposition temperature, and the activation energy of 1,1'-azo-bis(1-acetoxy-1-phenylethane) are almost the same as those of azobisisobutyronitrile (AIBN), and the silicone rubber sponge obtained using 1,1'-azo-bis(1-acetoxy-1-phenylethane) is excellent in the foaming property under hot blast, has a fine cell structure, is excellent in the surface smoothness of the skin layer, does not show a surface tackiness, and has a good compression set, as the same as in the silicone rubber sponge obtained using AIBN.

As described above, when using AIBN, a post cure of a long time is required, which reduces the productivity, but in the silicone rubber sponge obtained using 1,1'-azo-bis(1-acetoxy-1-phenylethane), such a problem does not occur.

The compounding amount of the component (B) is in the range of from 0.01 to 50 parts by weight, and preferably from 1 to 10 parts by weight, per 100 parts by weight of the thermosetting silicone rubber composition as the component (A). If the compounding amount of the component (B) is less than 0.01 part by weight, a sufficient foaming ratio is not obtained, while if the compounding amount thereof is over 50 parts by weight, the fineness of the cell structure is lost.

It has not been reported to use 1,1'-azo-bis(1-acetoxy-1-phenylethane) for silicone rubber compositions and the inventors have first found that by compounding a thermosetting silicone rubber composition with 1,1'-azo-bis(1-acetoxy-1-phenylethane), a silicone rubber sponge which is excellent in the foaming property even under hot blast, has a fine cell structure, is excellent in the surface smoothness of the skin layer, does not show a surface stickiness, has a good compression set, and does not need a post cure of a long time can be easily produced, and have accomplished the present invention. As a matter of course, it is easy to fill the composition of the present invention in a mold and obtain a molding by foaming and curing the composition.

The silicone rubber sponge composition of the present invention can be compounded with a semi-reinforcing or non-reinforcing filler in the range of not hindering the effects of the present invention. Examples of the semi-reinforcing or non-reinforcing filler are a metal carbonate, clay, talc, mica, titanium oxide, etc. Also, the silicone rubber composition of the present invention can be compounded with a heat resistant additive, a flame retardant, an antioxidant, a processing aid, a electroconductivity imparting agent, etc., which are conventionally used for silicone rubber compositions. Furthermore, it is possible to compound the silicone rubber sponge composition of the present invention with carbon, a ferrite powder, etc., and mold the composition by high frequency induction heating.

As described above, in the silicone rubber sponge composition of the present invention, by compounding a thermosetting silicone rubber composition with 1,1'-azo-bis(1-acetoxy-1-phenylethane), a silicone rubber sponge which is excellent in the foaming property, has a fine cell structure, is excellent in the surface smoothness of the skin layer, does not show a surface stickiness, has a good compression set, and does not need a post cure of a long time can be easily produced.

Further, the silicone rubber sponge obtained is very useful as a gasket roll, an electroconductive roll, a heat-insulating material, a cushion material, etc.

The present invention is described in more detail by reference to the following examples, but it should be understood that the invention is not construed as being limited thereto. Unless otherwise indicated, all parts, percents, ratios and the like are by weight.

### EXAMPLE 1

After compounding 100 parts of a thermosetting silicone rubber compound (TSE 2575 U, trade name, made by Toshiba Silicone Co., Ltd.) with 4 parts of 1,1'-azo-bis(1-acetoxy-1-phenylethane), 0.5 part (15 ppm as platinum to the total weight) of a platinum complex of chloroplatinic acid and tetramethylvinyldisiloxane as a curing catalyst, and 1.0 part of a both terminal-trimethylsiloxy group-blocked dimethylsiloxane/methylhydrogen siloxane copolymer (the content of hydrogen atom bonded to the silicon atoms: 0.8%) as a cross-linking agent, the mixture was further compounded with 1.0 part of triallyl isocyanurate as a curing inhibitor. The resulting mixture was mixed with two rolls until the mixture became uniform.

The silicone rubber compound obtained above was supplied to an extruder and continuously extruded at 5 m/minute to obtain a tubular silicone rubber compound having a cross section of the outer diameter of 30 mm and the inner diameter of 15 mm. The tube was cut in a length of 50 cm and allowed to stand in a dryer at 200°C for 10 minutes to obtain a silicone rubber sponge. The silicone rubber sponge thus obtained had a fine and uniform cell structure. The specific gravity thereof was 0.31. Further, the skin layer surface of the silicone rubber sponge was smooth and the silicone rubber sponge had a very preferable appearance without showing any tackiness. The compression set (50% compression, 180°C x 22 hours) thereof was 19%.

### EXAMPLE 2

After compounding 100 parts of a thermosetting silicone rubber compound (TSE 2575 U, trade name, made by Toshiba Silicone Co., Ltd.) with 4 parts of 1,1'-azo-bis(1-acetoxy-1-phenylethane), and 0.6 part of benzoyl peroxide and 0.8 part of dicumyl peroxide as curing agents, and the compounded mixture was mixed with two rolls until the mixture became uniform. The same procedure as in Example 1 was then followed to obtain a silicone rubber sponge. The silicone rubber sponge thus obtained had a fine and uniform cell structure. The specific gravity thereof was 0.29. Further, the skin layer surface of the silicone rubber sponge was smooth, and the silicone rubber sponge had a very preferably appearance without showing any stickiness. The compression set (50% compression, 180°C x 22 hours) was 28%.

### COMPARATIVE EXAMPLE 1

By following the same procedure as in Example 1 except that an organic foaming agent, AIBN (ME 800, trade name, made by Toshiba Silicone Co., Ltd.) was compounded in place of 1,1'-azo-bis(1-acetoxyl-1-phenylethane), a silicone rubber sponge was obtained. The specific gravity thereof was 0.33. The silicone rubber sponge thus obtained had a fine and uniform cell structure. Further, the skin layer surface of the silicone rubber sponge was smooth, and the silicone rubber sponge had a very preferable appearance without showing any tackiness. Also, the compression set (50% compression, 180°C x 22 hours) was 23%. However, a post cure of 200°C x 4 hours was required for removing the decomposition products of AIBN.

### COMPARATIVE EXAMPLE 2

By following the same procedure as in Example 1 except that an organic foaming agent, azo-dicarbonamide (CELLMIC CAP 500, trade name, made by Sankyo Kasei K.K.) was compounded in place of 1,1'-azo-bis(1-acetoxy-1-phenylethane), a silicone rubber sponge was obtained. The specific gravity thereof was 0.74. The silicone rubber sponge thus obtained had a rough cell structure, and further, the skin layer surface of the silicone rubber sponge had no smoothness and showed a tackiness. Also, the compression set (50% compression, 180°C x 22 hours) was 92%.

### EXAMPLE 3

By compounding 100 parts of polydimethylsiloxane having 0.13 mole% of a vinylmethylsiloxy unit and having a degree of polymerization of 7,000 with 20 parts of acetylene black (DENKA BLACK, trade name, made by Denki Kagaku Kogyo K.K.), and 18 parts of surface-treated dry silica (AEROSIL R-972, trade name, made by Nippon Aerosil K.K.), an electroconductive silicone rubber compound was prepared. 100 Parts of the conductive silicone rubber compound was compounded with 2 parts of 1,1'-azo-bis(1-acetoxy-1-phenylethane) and 1.0 part of 2,5-dimethyl-2,5-di-t-butyl peroxyhexane, and then, by following the same procedure as in Example 1 using the resulting mixture, a silicone rubber sponge was obtained. The silicone rubber sponge thus obtained had a fine and uniform cell structure. The specific gravity thereof was 0.50. Further, the skin layer surface of the silicone rubber sponge was smooth, and the silicone rubber sponge had a very preferable appearance without showing any tackiness. The compression set (50% compression, 180°C x 22 hours) was 15%. Also, the volume resistivity of the silicone rubber sponge was 5 x 10⁵ Ω·cm.

While the invention has been described in detail and with reference to specific embodiments thereof, it will be apparent to one skilled in the art that various changes and modifications can be made therein without departing from the spirit and scope thereof.

## Claims

1. A silicone rubber sponge composition comprising
(A) 100 parts by weight of a thermosetting silicone rubber composition comprising a polyorganosiloxane base polymer and a curing agent, and
(B) from 0.01 to 50 parts by weight of 1,1'-azo-bis(1-acetoxy-1-phenylethane) as a foaming agent.

2. The silicone rubber sponge composition as claimed in claim 1, wherein the curing agent is used in an amount of from 0.05 to 15 parts by weight per 100 parts by weight of the polyorganosiloxane base polymer.

3. The silicone rubber sponge composition as claimed in claim 1 or 2, wherein the curing agent is an organic peroxide.

4. The silicone rubber sponge composition as claimed in claim 1 or 2, wherein the curing agent is a combination of a diacyl type organic peroxide and other organic peroxide or an addition reaction type curing agent.

5. The silicone rubber sponge composition as claimed in at least one of the claims 1 to 4, wherein the thermosetting silicone rubber composition further comprises a reinforcing silica filler in an amount of from 1 to 100 parts by weight per 100 parts by weight of the polyorganosiloxane base polymer.

6. The silicone rubber sponge composition as claimed in at least one of the claims 1 to 5, wherein the thermosetting silicone rubber composition further comprises an electroconductive carbon black in an amount of from 1 to 100 parts by weight per 100 parts by weight of the polyorganosiloxane base polymer.

7. A silicone rubber sponge obtained by foaming and curing the silicone rubber sponge composition as claimed in at least one of the claims 1 to 6.
